# EUROPEAN PATENT APPLICATION

(11) **EP 4 434 401 A1**
(43) Date of publication of application: **25.09.2024**
(21) Application number: 22894729.7
(22) Date of filing: 11.11.2022
(51) Int. Cl.: A47C 1/12, A47C 1/00, A47C 7/40, A47C 7/42

(54) **VIBRATION SEAT**

(30) Priority: 19.11.2021 CN 202122895122 U
(71) Applicant: Beijing Chehejia Automobile Technology Co., Ltd., Beijing 101399 (CN)
(72) Inventor: YUAN, Baoguo, Beijing 101300 (CN); AN, Yupu, Beijing 101300 (CN)
(74) Representative: advotec.
(86) International application number: PCT/CN2022/131490
(87) International publication number: WO 2023/088193

(57) **Abstract**

A vibration seat (100), comprising a seat body (10). A fixing clamping plate (20) is arranged on the seat body (10) and provided with an avoidance hole (20a) and a clamping hole (20b) penetrating through two opposite plate surfaces of the fixing clamping plate (20). The clamping hole (20b) is in communication with the avoidance hole (20a), and the clamping structure (32) of the vibration module (30) is connected to the vibration body (31).

## Description

### CROSS-REFERENCE TO RELATED APPLICATION

This application is based on and claims priority to Chinese Patent Application No. 202122895122.X, filed on November 19, 2021, the entire content of which is incorporated herein by reference.

### FIELD

The present disclosure relates to the field of seats, and more particularly to a vibration seat.

### BACKGROUND

With the continuous improvement of living standards, the demand of people for entertainment facilities is becoming higher and higher. Currently, 4D seats are widely used for cinemas, game halls and other entertainment places, and are an important part thereof. In the 4D seat, a vibration body is arranged on the seat to drive the seat to vibrate, so as to simulate the wind, water and other effects in the entertainment scene and the common vibration, falling and other phenomena in life, and cooperate with the plots in movies or game screens through a control system, so that the audience has an immersive feeling. In the vibration seat in the related art, the detachment and installation operations of the vibration body in the disassembling and assembling processes of the vibration body and the seat are very troublesome, which is not conducive to later maintenance.

### SUMMARY

The main purpose of the present disclosure is to provide a vibration seat, which is intended to facilitate its maintenance.

In order to achieve the above purpose, the vibration seat proposed by the present disclosure includes: a seat body; a fixed engaging plate arranged to the seat body and having an avoiding hole and an engaging hole, the avoiding hole and the engaging hole running through two opposite plate surfaces of the fixed engaging plate, respectively, the engaging hole being in communication with the avoiding hole; and a vibration module including a vibration body and an engaging structure connected to the vibration body. The engaging structure is configured to pass through the avoiding hole and slide to be engaged in the engaging hole, so that the vibration body is fixed with the fixed engaging plate.

In some embodiments, the engaging structure includes an engaging section and a limiting section connected to each other, the engaging section is connected to the vibration body, the limiting section and the engaging section are configured to pass through the avoiding hole and slide to the engaging hole, the engaging section is engaged in the engaging hole, and the limiting section abuts against a side of the fixed engaging plate facing away from the vibration body.

In some embodiments, a cross section area of the limiting section is greater than a cross section area of the engaging section.

In some embodiments, the engaging hole extends into a strip shape along the plate surface of the fixed engaging plate, and the engaging section is configured to slide along a length direction of the engaging hole to be engaged in the engaging hole.

In some embodiments, the avoiding hole is in communication with the engaging hole to form a T shape.

In some embodiments, a hole side wall of the engaging hole is recessed form a plurality of positioning grooves spaced apart from each other, the plurality of positioning grooves are formed in two opposite side wall surfaces of the engaging hole, and side wall surfaces of the plurality of positioning grooves and the hole side walls of the engaging hole have an arc-like transition.

In some embodiments, the engaging structure further includes a first buckle connected to the vibration body, the fixed engaging plate is provided with a second buckle, and the first buckle is configured to be buckled with the second buckle when the engaging section is engaged in the engaging hole.

In some embodiments, the second buckle includes an elastic arm and a buckling section connected to each other, the elastic arm is connected to the fixed engaging plate, the buckling section is connected to an end of the elastic arm, and the elastic arm is configured to provide an elastic force, so that the first buckle is buckled with the buckling section.

In some embodiments, the elastic arm includes a first elastic connecting section and a second elastic connecting section, an end of the first elastic connecting section protrudes from the fixed engaging plate and extends towards a side where the first buckle is, the second elastic connecting section is connected to another end of the first elastic connecting section and is arranged at an included angle of 90 degrees with the first elastic connecting section, and the buckling section is connected to an end of the second elastic connecting section.

In some embodiments, an included angle formed between the buckling section and a direction pointing from the avoiding hole to the engaging hole is an acute angle, and an included angle formed between the first buckle and the direction pointing from the avoiding hole to the engaging hole is an obtuse angle.

In some embodiments, a side edge of the fixed engaging plate is provided with a notch, and the second buckle is arranged in the notch and connected to a side wall of the notch.

In some embodiments, the notch is defined in a long side edge of the fixed engaging plate, and an opening direction of the notch is a direction pointing from the engaging hole to the avoiding hole.

In some embodiments, the seat body includes a seat cushion, a backrest, and a fixed suspension spring, the backrest is connected to the seat cushion, the fixed suspension spring is arranged to the backrest, and the fixed engaging plate is connected to the fixed suspension spring.

In some embodiments, the vibration seat includes two fixed engaging plates, the vibration body is arranged in a middle part of the backrest, the two fixed engaging plates are located on two opposite sides of the vibration body, and one fixed engaging plate is engaged with at least three fixed suspension spring.

In some embodiments, the fixed suspension spring is a metal part, the fixed engaging plate is a plastic part, and the fixed engaging plate and the fixed suspension spring are integrally injection-molded.

In the technical solution of the present disclosure, the vibration seat is used, the fixed engaging plate is arranged to the seat body and has the avoiding hole and the engaging hole running through the two opposite plate surfaces of the fixed engaging plate. The engaging hole is in communication with the avoiding hole, and the engaging structure of the vibration module is connected to the vibration body. For the vibration seat in the present disclosure, when the vibration body is installed, the engaging structure passes through the avoiding hole and corresponds to the engaging hole, and the vibration body is moved, so that the engaging structure slides and is engaged in the engaging hole, and the vibration body is fixedly connected to the fixed engaging plate. In this way, the connection between the vibration body and the fixed engaging plate is more stable, and when the vibration body needs to be detached, it only needs to move the vibration body towards a side facing away from the engaging hole, and the engaging structure slides in the engaging hole and is detached from the engaging hole. Therefore, the installation and fixation of the vibration body of the present disclosure are stable, and also it is labor-saving for detachment and installation of the vibration body, thus greatly facilitating the assembling and later maintenance of the vibration seat.

### BRIEF DESCRIPTION OF THE DRAWINGS

In order to more clearly explain the technical solution of embodiments of the present disclosure, the accompanying drawings required to be used in the embodiments will be briefly described below, and it is obvious that for those skilled in the art, the accompanying drawings described below are only some embodiments of the present disclosure, other accompanying drawings can be obtained according to structures shown in these accompanying drawings without creative labors.
Fig. 1 is a schematic view of a vibration seat according to an embodiment of the present disclosure viewed from an angle.
Fig. 2 is a schematic view of the vibration seat shown in Fig. 1 from another angle.
Fig. 3 is an exploded view of a partial structure of the vibration seat shown in Fig. 1.
Fig. 4 is a detail enlarged view of part A in Fig. 3.
Fig. 5 is a schematic view of a partial structure of the vibration seat shown in Fig. 1.
Fig. 6 is a detail enlarged view of part B in Fig. 5.

### References signs:

| Sign | Name | Sign | Name |
|---|---|---|---|
| 100 | vibration seat | 21a | notch |
| 10 | seat body | 22 | second buckle |
| 12 | backrest | 221 | elastic arm |
| 13 | fixed suspension spring | 222 | buckling section |
| 131 | transverse rib | 30 | vibration module |
| 132 | longitudinal rib | 31 | vibration body |
| 14 | backrest frame | 311 | plug |
| 20 | fixed engaging plate | 32 | engaging structure |
| 20a | avoiding hole | 321 | engaging section |
| 20b | engaging hole | 322 | limiting section |
| 21 | plate body | 323 | first buckle |

The realization of the purpose of the present disclosure, the functional characteristics and the advantages will be further explained with reference to the accompanying drawings in conjunction with embodiments.

### DETAILED DESCRIPTION

The technical solution in embodiments of the present disclosure will be described clearly and completely in combination with the accompanying drawings in the embodiments of the present disclosure. Obviously, the embodiments described are only part embodiments of the present disclosure, rather than all the embodiments. Based on the embodiments in the present disclosure, all the other embodiments obtained by those skilled in the art without creative works fall within the protection scope of the present disclosure.

It should be noted that all directional indications (such as up, down, left, right, front, rear...) in the embodiments of the present disclosure are only used to explain the relative position relationship and motion situation between components in a specific posture (as shown in the accompanying drawings), and if the specific posture changes, the directional indication will change accordingly.

In addition, the descriptions related to "first" and "second" in the present disclosure are only used for purpose of description, and cannot be understood as indicating or implying relative importance or implicitly indicating the number of indicated technical features. Therefore, the feature defined as "first" or "second" may explicitly or implicitly include at least one such feature. In addition, the technical solutions between various embodiments can be combined with each other, but only on the basis that those skilled in the art can achieve. When the combination of the technical solutions has contradiction or cannot be achieved, it should be considered that such combination of the technical solutions does not exist and is not within the protection scope required by the present disclosure.

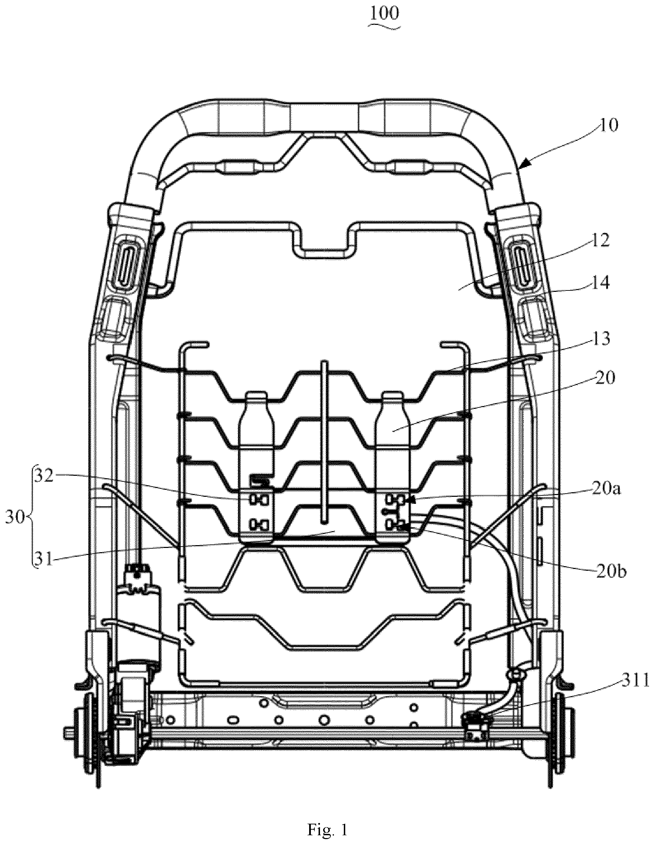

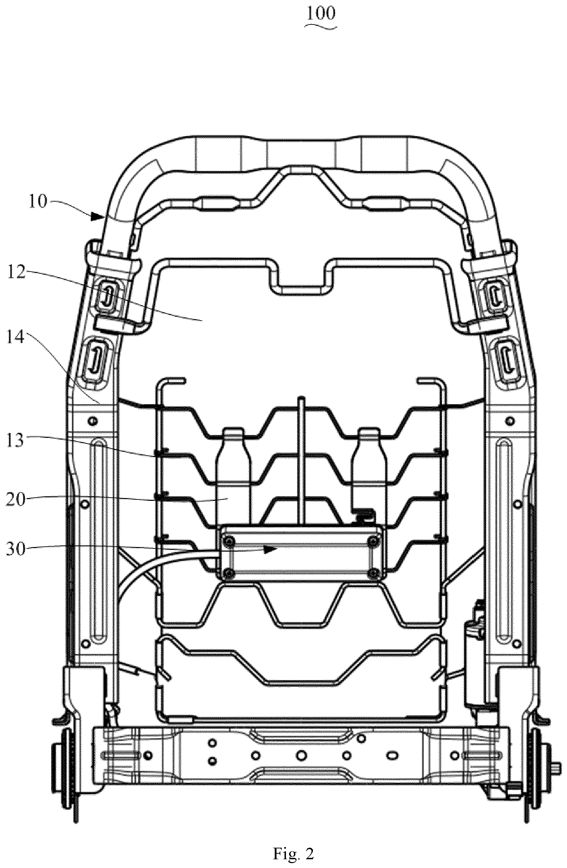

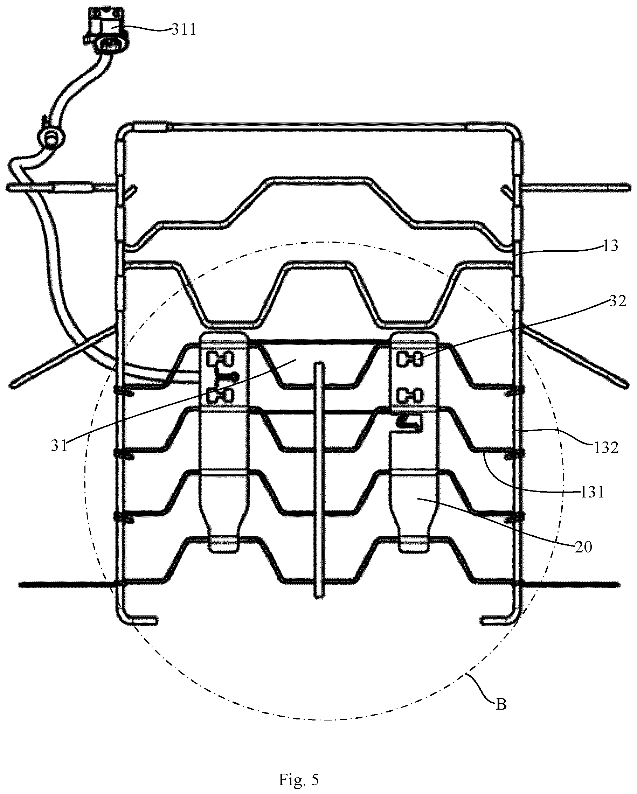

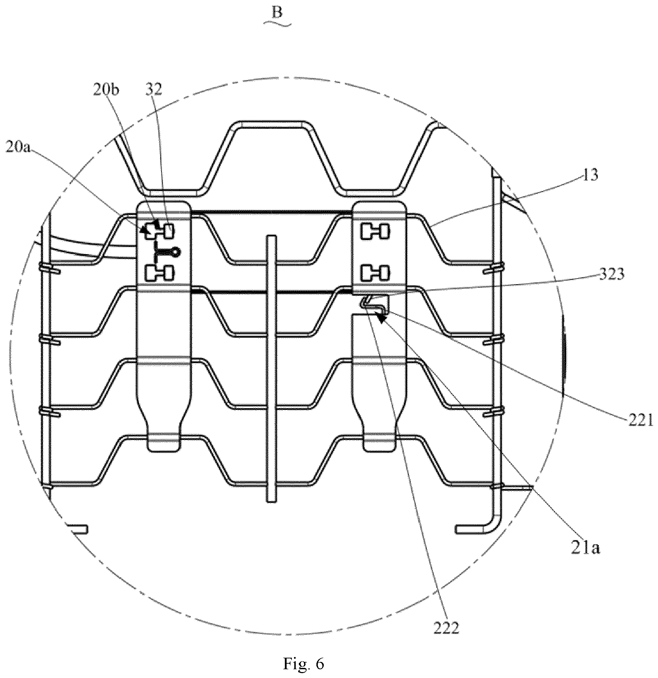

Referring to Figs. 1 to 6, the present disclosure proposes a vibration seat 100.

In embodiments of the present disclosure, the vibration seat 100 includes: a seat body 10; a fixed engaging plate 20 arranged on the seat body 10 and provided with an avoiding hole 20a and an engaging hole 20b running through two opposite plate surfaces of the fixed engaging plate 20, the engaging hole 20b being in communication with the avoiding hole 20a; and a vibration module 30 including a vibration body 31 and an engaging structure 32. The engaging structure 32 includes an engaging section 321 and a limiting section 322 connected to each other, the engaging section 321 is connected to the vibration body 31, the limiting section 322 and the engaging section 321 pass through the avoiding hole 20a, and the engaging section 321 is engaged in the engaging hole 20b, so that the vibration body 31 is fixed with the fixed engaging plate 20.

Specifically, the seat body 10 may include a seat cushion and a backrest 12, the seat cushion includes a cushion frame and a cushion body, the backrest 12 includes a backrest frame 14 and a backrest cushion, and the cushion frame and the backrest frame 14 may be made of metal profiles or plastic materials. In the embodiments of the present disclosure, the backrest frame 14 is made of metal profiles, the seat body 10 is firm and durable, and the service life of the seat body 10 is longer. The cushion frame and the backrest frame 14 are rotatably connected by a rotating shaft, the cushion body is laid on the cushion frame, and the backrest cushion is laid on the backrest frame 14. Under the action of an external force, the backrest frame 14 may be rotated relative to the cushion frame and forms a specific angle with the cushion frame, so as to adapt to the sitting habits of different groups of people. In the present disclosure, the backrest frame 14 may be rotated relative to the cushion frame manually or automatically. Specifically, in an embodiment, an angle adjusting mechanism is arranged between the backrest frame 14 and the cushion frame, and the users may drive the backrest frame 14 to rotate relative to the cushion frame through the angle adjusting mechanism, so as to adapt to their own sitting habits. In another embodiment, the rotating shaft is in transmission connection with a driving motor, and the driving motor drives the rotating shaft to rotate, so as to drive the backrest frame 14 to rotate. Thus, the vibration seat 100 can better adapt to the sitting postures of different groups of people, and also its adjusting operation is more labor-saving and intelligent.

In the embodiments of the present disclosure, the fixed engaging plate 20 is connected to the backrest frame 14 and extends along a length direction of the backrest frame 14, and the engaging hole 20b and the avoiding hole 20a in communication with each other of the fixed engaging plate 20 are formed by machining or injection molding.

In the embodiments of the present disclosure, the fixed engaging plate 20 also may be formed by metal materials or plastic materials. In some embodiments, the fixed engaging plate 20 is a plastic part, the backrest 12 has a fixed suspension spring 13, the fixed suspension spring 13 is a metal part, and the fixed engaging plate 20 and the fixed suspension spring 13 are integrally injection-molded.

The fixed engaging plate 20 has a first plate surface and a second plate surface arranged opposite to each other, and the avoiding hole 20a runs through the first plate surface and the second plate surface. Similarly, the engaging hole 20b also runs through the first plate surface and the second plate surface. In the embodiments of the present disclosure, the avoiding hole 20a and the engaging hole 20b are distributed along the first plate surface.

For the vibration seat 100 in the embodiments of the present disclosure, when the vibration body 31 is installed, the limiting section 322 and the engaging section 321 first pass through the avoiding hole 20a, and then the limiting section 322 and the engaging section 321 slide to the engaging hole 20b from the avoiding hole 20a, so that the engaging section 321 corresponds to the engaging hole 20b. At this time, the engaging section 321 is engaged in the engaging hole 20b, to limit the engaging structure to move back, and the limiting section 322 abuts against a side of the fixed engaging plate 20 facing away from the vibration body 31, to limit separation of the vibration body 31 from the fixed engaging plate 20 along an opening direction of the engaging hole 20b. In this way, the connection between the vibration body 31 and the fixed engaging plate 20 is more stable, and when the vibration body 31 needs to be detached, it only needs to move the vibration body 31 towards a side facing away from the engaging hole 20b, and the engaging section 321 can be detached from the engaging hole 20b. Therefore, the installation and fixation of the vibration body 31 of the present disclosure are stable, and also the detachment and installation of the vibration body 31 of the present disclosure are labor-saving, thus greatly facilitating the assembling and later maintenance of the vibration seat 100.

A function of the limiting section 322 in the present disclosure is to limit the engaging section 321 with the fixed engaging plate 20, and thus a projection range of the limiting section 322 projected on the fixed engaging plate 20 should exceed a range of the engaging hole 20b, that is, a cross section area of the limiting section 322 is greater than a cross section area of the engaging section 321. In some embodiments, a cross section of the engaging structure 32 has a T shape as a whole, and the avoiding hole 20a and the engaging hole 20b are connected to form a T shape. The projection range of the limiting section 322 on the fixed engaging plate 20 should be less than a range of the avoiding hole 20a.

Specifically, the vibration body 31 is located on a side where the first plate surface is located, and the limiting section 322 passes through the avoiding hole 20a from the first plate surface, to be located on a side where the second plate surface is located. When the engaging section 321 is engaged in the engaging hole 20b, the limiting section 322 abuts against the second plate surface.

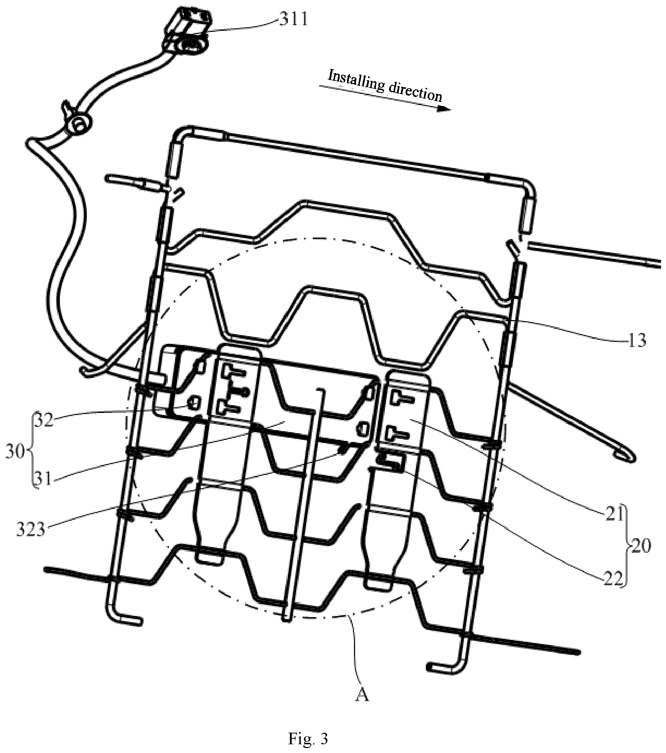

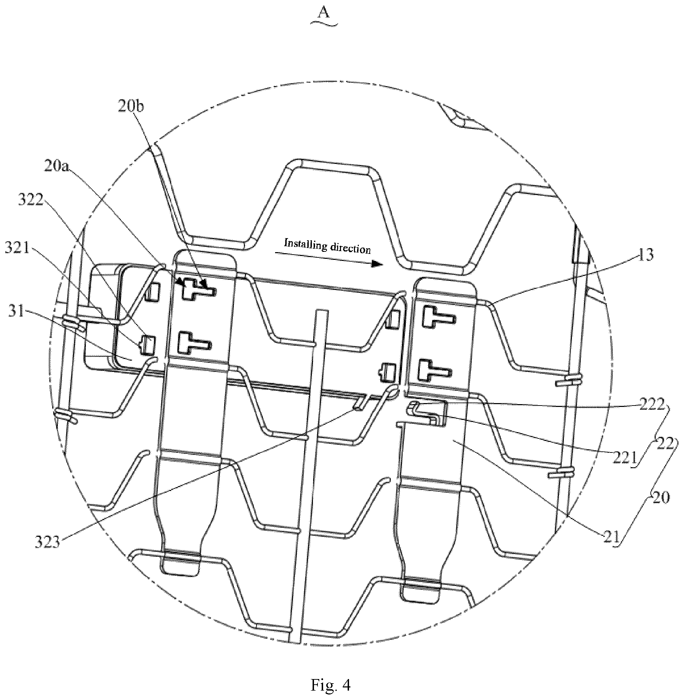

Referring to Fig. 3 and Fig. 4 again, in order to make the connection between the vibration body 31 and the fixed engaging plate 20 more stable, in an embodiment of the present disclosure, the engaging hole 20b is arranged to extend along the plate surface of the fixed engaging plate 20, that is, the engaging hole 20b has a strip shape, and in some embodiments, the engaging hole 20b has an elongated shape. In the embodiments of the present disclosure, the engaging hole 20b extends in a transverse direction along a surface of the fixed engaging plate 20, and its extending direction is defined as an installing direction. The installing direction refers to a direction pointing from the avoiding hole 20a to the engaging hole 20b. During actual assembling, the limiting section 322 and the engaging section 321 pass through the avoiding hole 20a, the engaging section 321 moves relative to the fixed engaging plate 20 along the installing direction, i.e. along a length direction of the engaging hole 20b, and the engaging section 321 slides to be engaged in the engaging hole 20b to connect and fix the vibration body 31 with the fixed engaging plate 20. In the present disclosure, by extending the arranged engaging hole 20b, an engaging distance between the engaging section 321 and the fixed engaging plate 20 can be greatly increased, thereby making the connection between the vibration body 31 and the fixed engaging plate 20 more stable and improving the use stability of the vibration seat 100.

Further, a cross section area of the engaging hole 20b gradually decreases along the installing direction, that is, the engaging hole 20b is flared towards a side where the avoiding hole 20a is, and an outline of the engaging hole 20b is conical. In the present disclosure, since the cross section of the engaging hole 20b gradually decreases along the installing direction, when the engaging section 321 is engaged in the engaging hole 20b and further slides in the installing direction, an acting force between the engaging section 321 and a hole side wall of the engaging hole 20b gradually increases, as a hole diameter of the engaging hole 20b gradually decreases, so that the engaging section 321 is engaged with the fixed engaging plate 20 more stably.

In another embodiment of the present disclosure, the hole side wall of the engaging hole 20b is recessed to form a plurality of positioning grooves spaced apart from each other (not shown), the plurality of positioning grooves are formed in two opposite side wall surfaces of the engaging hole 20b, and side wall surfaces of the plurality of positioning grooves and the hole side walls of the engaging hole 20b have an arc-like transition, that is, the hole side wall of the engaging hole 20b and the side wall surfaces of the plurality of positioning grooves extend as a whole in a wave-shaped track along the installing direction. The engaging section 321 is engaged in the engaging hole, and may be embedded in any two positioning grooves. In the embodiment, by the plurality of positioning grooves spaced apart from each other, the engaging section 321 may be fixed and positioned in any position in the engaging hole 20b. Therefore, in actual use, the users may adjust the position of the vibration body 31 according to their own needs, making the vibration position of the vibration body 31 more suitable for their own feelings. In this way, the installation of the vibration body 31 is stable, the detachment and installation of the vibration body 31 are convenient, and also the user experience of the vibration seat 100 is better.

In an embodiment of the present disclosure, the engaging section 321, the limiting section 322 and the vibration body 31 are an integrally formed structure. Specifically, in the present disclosure, the vibration body 31 includes a housing and a vibration mechanism, the housing is a shell cavity structure made of metal materials or plastic materials, the vibration mechanism is installed in the cavity of the housing, and the engaging section 321 and the limiting section 322 may be integrally formed with the housing by injection molding or machining. In the present disclosure, the engaging section 321, the limiting section 322 and the housing are integrally formed, so that the structure of the vibration body 31 is simpler, and the assembling process is simplified. Of course, the engaging section 321 and the limiting section 322 may also be fixed on a surface of the housing by fastening structures such as a bolt. For example, in an embodiment, the engaging section 321 is integrally formed with the housing and is provided with a threaded hole, a surface of the limiting section 322 is provided with a stud protruding therefrom, and the stud is screwed in the threaded hole to connect and fix the engaging section 321 with the limiting section 322. In this way, when the vibration body 31 is installed or detached, the engaging section 321 may be directly inserted in the engaging hole 20b, and then the limiting section 322 is connected with the engaging section 321, so that the detachment and installation modes of the vibration body 31 are more diverse, and the detachment and installation are also more convenient.

It should be noted that, in the embodiment, the vibration body 31 is an audio vibration body 31, and the vibration mechanism includes a control circuit board, a converter, a voice coil, a vibration diaphragm, and a plug 311. The converter, the voice coil and the vibration diaphragm are arranged in the housing. The converter and the voice coil are electrically connected through a wire. The voice coil is connected to the control circuit board through a terminal connecting wire. One end of the plug 311 is bonded to a board surface of the control circuit board, and the other end of the plug 311 is connected with a socket at a power supply end. A current flows to a side where the voice coil is through the plug 311 and the control circuit board, the voice coil is driven to generate vibration and drives the vibration diaphragm to vibrate, the vibration diaphragm drives the housing attached thereto to generate vibration, and then the housing drives the backrest 12 attached thereto to generate vibration.

Of course, in another embodiment of the present disclosure, the vibration mechanism may also have a mechanical vibration mode, that is, the vibration mechanism includes a driving motor and a polarization rotor sleeved on an output shaft of the driving motor, and the driving motor drives the polarization rotor to rotate in the housing, thereby driving the backrest 12 to generate vibration. Herein, the specific form and the specific structure of the vibration body 31 may be determined according to the actual need, as long as the backrest 12 can be driven to generate vibration.

Referring to Fig. 4 to Fig. 6 again, in order to make the connection between the fixed engaging plate 20 and the vibration body 31 more stable, in an embodiment of the present disclosure, the engaging structure 32 further includes a first buckle 323 connected to the vibration body 31, the fixed engaging plate 20 includes a plate body 21 and a second buckle 22 connected to the plate body 21, the engaging section 321 is engaged in the engaging hole 20b, and the first buckle 323 is buckled with the second buckle 22.

Specifically, the first buckle 323 is arranged at a side of the housing and is integrally formed with the housing, the first buckle 323 is protrudes the surface of the housing, the plate body 21 of the fixed engaging plate 20 is connected to a fixed frame of the backrest 12 and extends in a strip shape, and the second buckle 22 protrudes from a surface of a side of the plate body 21 facing towards the housing. When the engaging section 321 slides to a preset position in the engaging hole 20b, the first buckle 323 is buckled with the second buckle 22, that is, in the installing direction, the fixed engaging plate 20 and the vibration body 31 are limited by the first buckle 323 and the second buckle 22, thus preventing the engaging section 321 from sliding in the engaging hole 20b and coming out of the engaging hole 20b along a direction opposite to the installing direction. In the present disclosure, by the first buckle 323, the second buckle 22, the engaging section 321, and the limiting section 322, the fixed engaging plate 20 and the vibration body 31 are limited and fixed in three directions, so that the connection of the vibration body 31 is more stable.

Further, the second buckle 22 includes an elastic arm 221 and a buckling section 222 connected to each other, the elastic arm 221 is connected to the plate body 21, the buckling section 222 is connected to an end of the elastic arm 221, and the elastic arm 221 provides an elastic force, so that the first buckle 323 can be buckled with the buckling section 222.

Specifically, the elastic arm 221 includes a first elastic connecting section and a second elastic connecting section, an end of the first elastic connecting section protrudes from the plate body 21 of the fixed engaging plate 20 and extends towards a side where the first buckle 323 is, the second elastic connecting section is connected to another end of the first elastic connecting section and is arranged at an included angle of 90 degrees with the first elastic connecting section, and the buckling section 222 is connected to an end of the second elastic connecting section. In some embodiments, the first elastic connecting section and the second elastic connecting section are each a sheet-shaped rod structure. Under the action of an external force, the first elastic connecting section and the second elastic connecting section may be deformed relative to the plate body 21 and have a tendency to recover to their original states. In the embodiments of the present disclosure, the engaging section 321 is engaged in the engaging hole 20b and gradually slides to the preset position in the engaging hole 20b, the first buckle 323 abuts against the buckling section 222 and jacks up the buckling section 222, and the second elastic connecting section undergoes bending deformation relative to the first elastic connecting section after being subjected to a force from the buckling section 222. When the engaging section 321 slides to the preset position, the first buckle 323 is buckled with the buckling section 222. Since the second elastic connecting section has the tendency to recover the elastic deformation, this elastic force will act on the buckling section 222, and the buckling section 222 acts on the first buckle 323, so that the connection of the first buckle 323 and the second buckle 22 is more stable.

In some embodiments of the present disclosure, an included angle formed between the buckling section 222 and the installing direction is an acute angle, and an included angle formed between the first buckle 323 and the installing direction is an obtuse angle. Specifically, the first buckle 323 protrudes from the surface of the housing and is inclined towards a side facing away from the installing direction, and an included angle formed between the first buckle 323 and a direction facing away from the installing direction is an acute angle. Correspondingly, the included angle formed between the buckling section 222 and the installing direction is an obtuse angle, that is, the buckling section 222 is inclined towards a side where the second elastic connecting section is, and the included angle formed between the buckling section 222 and the second elastic connecting section is an acute angle. In the embodiments of the present disclosure, when the engaging section 321 is engaged in the engaging hole 20b and slides towards the installing direction, the first buckle 323 gradually abuts against the buckling section 222, and inclination directions of the two are the same. As the vibration body 31 slides, the first buckle 323 is fitted with a surface of the buckling section 222 and abuts against it, and the buckling section 222 is subjected to a force from the first buckle 323, slides relative to a surface of the first buckle 323, and finally is buckled with the first buckle 323. After the first buckle 323 is buckled with the buckling section 222, since the inclination directions of the first buckle 323 and the buckling section 222 are opposite to a disengaging direction, the buckling between the first buckle 323 and the buckling section 222 is more firm. In this way, in the present disclosure, by the first buckle 323 and the buckling section 222 that are inclined, on the one hand, it is labor-saving to buckle the first buckle 323 with the second buckle 22, and on the other hand, the first buckle 323 and the second buckle 22 are not easy to disengage, so that the connection between the vibration body 31 and the fixed engaging plate 20 is more firm.

Further, in the embodiments of the present disclosure, a side edge of the fixed engaging plate 20 is further provided with a notch 21a, and the second buckle 22 is located in the notch 21a and connected to a side wall of the notch 21a. Specifically, the elastic arm 221 and the buckling section 222 are partially exposed from the notch 21a, and after the buckling section 222 is buckled with the first buckle 323, the first buckle 323 and the second buckle 22 are simultaneously exposed from the notch 21a, the second elastic connecting section of the elastic arm 221 and a side wall surface of the notch 21a form a disengaging gap, and the disengaging gap is used for a finger to pass through. In the embodiments of the present disclosure, by arranging the notch 21a, it is convenient for the user to pull the second elastic connecting section on another side of the plate body 21, that is, pulling towards a side facing away from the first buckle 323 when the buckling section 222 is buckled with the first buckle 323 and the vibration body 31 needs to be detached, thus avoiding the situation that the buckling section 222 and the first buckle 323 are broken under stress during disassembling and assembling.

In some embodiments of the present disclosure, an opening direction of the notch 21a is a direction pointing from the engaging hole 20b to the avoiding hole 20a. Therefore, when the vibration body 31 is pushed from the avoiding hole 20a to the engaging hole 20b, the first buckle 323 enters the notch 21a from an opening of the notch 21a, and is buckled with the second buckle 22 after crossing the second buckle 22, so as to prevent the vibration body 31 from sliding back (i.e., disengaging from the notch 21a via the opening of the notch 21a).

In some embodiments of the present disclosure, the notch 21a is formed in a long side edge of the fixed engaging plate 20. The fixed engaging plate 20 is provided with a plurality of avoiding holes 20a in its length direction, and correspondingly, one engaging hole 20b is correspondingly provided for each avoiding hole 20a. In a specific example, the fixed engaging plate 20 is provided with two avoiding holes 20a and two engaging holes 20b in its length direction.

Further, the seat body 10 is provided with a plurality of fixed engaging plates 20, such as two fixed engaging plates 20, the plurality of fixed engaging plate 20 are arranged and spaced apart in sequence, and each fixed engaging plate 20 is provided with at least one avoiding hole 20a and at least one engaging hole 20b. The plurality of fixed engaging plates 20 are distributed at intervals along their own width directions.

In the embodiments of the present disclosure, the seat body 10 further includes a fixed suspension spring 13 arranged on the backrest 12, the fixed engaging plate 20 is connected to the fixed suspension spring 13, and the fixed suspension spring 13 provides an elastic force, to vibrate along with the vibration of the vibration body 31.

Specifically, the fixed suspension spring 13 is made of metal materials, two ends of the fixed suspension spring 13 are fixedly connected to the backrest frame 14 and spaced apart from a surface of the backrest cushion by a certain distance, and the fixed engaging plate 20 and the fixed suspension spring 13 are integrally formed by in-mold injection molding. Of course, the fixed engaging plate 20 and the fixed suspension spring 13 also may be connected and fixed by bonding or screw connection. A distance between two opposite surfaces of the fixed engaging plate 20 and the backrest cushion is slightly less than a thickness of the housing of the vibration body 31. In the actual assembling process, the vibration body 31 is arranged between the fixed engaging plate 20 and the backrest cushion, and two opposite surfaces of the housing of the vibration body 31 are fitted with the fixed engaging plate 20 and the backrest cushion, respectively. Moreover, since the thickness of the housing is greater than the distance between the fixed engaging plate 20 and the backrest cushion, the fixed suspension spring 13 is stretched and deformed by the housing, the elastic force of the fixed suspension spring 13 acts on the housing in turn, so as to firmly press it on the surface of the backrest cushion, so that the fixation of the vibration body 31 is more firm, and the vibration effect is better.

It may be understood that, the vibration body 31 is arranged in a middle part of the backrest 12 in the present disclosure. In the actual use process, the vibration body 31 will generate vibration along with the change of the scene, and then vibrate a central part of the back of the user, so that the vibration feel thereof is stronger and more comfortable. The two fixed engaging plates 20 are located on two opposite sides of the vibration body 31, respectively, and one fixed engaging plate 20 is at least engaged with three fixed suspension spring 13. In this way, the connection between the fixed engaging plate 20 and the backrest 12 is relatively stable, and since the vibration body 31 is attached to the two fixed engaging plates 20, the resonance with the fixed suspension spring 13 can be avoided, thereby improving the transmission efficiency of the vibration. Of course, the vibration body 31 may also be arranged on the seat cushion, or simultaneously arranged on the seat cushion and the backrest 12. The number of the vibration body 31 may be one, two, five or more, and the number and arrangement position of the vibration body 31 of the present disclosure are not specifically limited herein.

In some embodiments of the present disclosure, the fixed suspension spring 13 includes a plurality of transverse ribs 131 and at least two longitudinal ribs 132, the plurality of transverse ribs 131 are longitudinally arranged at intervals in sequence, and the at least two longitudinal ribs 132 are distributed along a length direction of the transverse rib 131 and are connected with the transverse rib 131. Thus, the plurality of transverse ribs 131 and the at least two longitudinal ribs 132 form a similar criss-cross mesh-like structure.

In some embodiments of the present disclosure, the fixed suspension spring 13 includes two longitudinal ribs 132, the two longitudinal ribs 132 are arranged at two ends of the transverse rib 131, respectively, an end of the transverse rib 131 is bent and winded around the longitudinal rib 132, which is equivalent to hanging the end of the transverse rib 131 on the longitudinal rib 132, and thus the connection between the transverse rib 131 and the longitudinal rib 132 is achieved.

In some embodiments of the present disclosure, the transverse rib 131 is bent in a plurality of sections, to form a plurality of concave parts and convex parts in the length direction of the transverse rib 131, and the concave parts and the convex parts are alternately arranged in the length direction of the transverse rib 131. The concave part of any one of the transverse ribs 131 corresponds to the concave parts of other transverse ribs 131, and the convex part of any one of the transverse ribs 131 corresponds to the convex parts of other transverse ribs 131. The correspondence in the embodiment refers to the correspondence in a length direction of the longitudinal rib 132.

In the present disclosure, unless otherwise specified and defined definitely, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure can be understood according to the specific situations.

In the present disclosure, unless otherwise specified and defined definitely, a first feature "on" or "under" a second feature may include an embodiment in which the first feature is in direct contact with the second feature, or the first feature is in indirect contact with the second feature through an intermediate media. And, the first feature "above", "on", or "on top of' the second feature may include an embodiment in which the first feature is right or obliquely "above", "on", or "on top of' the second feature, or just means that the first feature is at a height higher than the second feature. The first feature "below", "under", or "on bottom of' the second feature may include an embodiment in which the first feature is right or obliquely "below", "under", or "on bottom of" the second feature, or just means that the first feature is at a height lower than the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the above embodiments have been shown and described, it can be understood that the above embodiments are illustrative and shall not be understood as limitation to the present disclosure, and changes, modifications, alternatives and variations can be made in the above embodiments by those skilled in the art all fall within the protection scope of the present disclosure.

## Claims

1. A vibration seat, comprising:
a seat body;
a fixed engaging plate arranged to the seat body and having an avoiding hole and an engaging hole, the avoiding hole and the engaging hole running through two opposite plate surfaces of the fixed engaging plate, respectively, the engaging hole being in communication with the avoiding hole; and
a vibration module comprising a vibration body and an engaging structure connected to the vibration body, wherein the engaging structure is configured to pass through the avoiding hole and slide to be engaged in the engaging hole, so that the vibration body is fixed with the fixed engaging plate.

2. The vibration seat according to claim 1, wherein the engaging structure comprises an engaging section and a limiting section connected to each other, the engaging section is connected to the vibration body, the limiting section and the engaging section are configured to pass through the avoiding hole and slide to the engaging hole, the engaging section is engaged in the engaging hole, and the limiting section abuts against a side of the fixed engaging plate facing away from the vibration body.

3. The vibration seat according to claim 2, wherein a cross section area of the limiting section is greater than a cross section area of the engaging section.

4. The vibration seat according to claim 2 or 3, wherein the engaging hole extends into a strip shape along the plate surface of the fixed engaging plate, and the engaging section is configured to slide along a length direction of the engaging hole to be engaged in the engaging hole.

5. The vibration seat according to any one of claims 2 to 4, wherein the avoiding hole is in communication with the engaging hole to form a T shape.

6. The vibration seat according to any one of claims 2 to 5, wherein a hole side wall of the engaging hole is recessed to form a plurality of positioning grooves spaced apart from each other, the plurality of positioning grooves are formed in two opposite side wall surfaces of the engaging hole, and side wall surfaces of the plurality of positioning grooves and the hole side walls of the engaging hole have an arc-like transition.

7. The vibration seat according to any one of claims 2 to 6, wherein the engaging structure further comprises a first buckle connected to the vibration body, the fixed engaging plate is provided with a second buckle, and the first buckle is configured to be buckled with the second buckle when the engaging section is engaged in the engaging hole.

8. The vibration seat according to claim 7, wherein the second buckle comprises an elastic arm and a buckling section connected to each other, the elastic arm is connected to the fixed engaging plate, the buckling section is connected to an end of the elastic arm, and the elastic arm is configured to provide an elastic force, so that the first buckle is buckled with the buckling section.

9. The vibration seat according to claim 8, wherein the elastic arm comprises a first elastic connecting section and a second elastic connecting section, an end of the first elastic connecting section protrudes from the fixed engaging plate and extends towards a side where the first buckle is, the second elastic connecting section is connected to another end of the first elastic connecting section and is arranged at an included angle of 90 degrees with the first elastic connecting section, and the buckling section is connected to an end of the second elastic connecting section.

10. The vibration seat according to claim 8 or 9, wherein an included angle formed between the buckling section and a direction pointing from the avoiding hole to the engaging hole is an acute angle, and an included angle formed between the first buckle and the direction pointing from the avoiding hole to the engaging hole is an obtuse angle.

11. The vibration seat according to any one of claims 9 to 10, wherein a side edge of the fixed engaging plate is provided with a notch, and the second buckle is arranged in the notch and connected to a side wall of the notch.

12. The vibration seat according to claim 11, wherein the notch is defined in a long side edge of the fixed engaging plate, and an opening direction of the notch is a direction pointing from the engaging hole to the avoiding hole.

13. The vibration seat according to any one of claims 1 to 12, wherein the seat body comprises a seat cushion, a backrest, and a fixed suspension spring, the backrest is connected to the seat cushion, the fixed suspension spring is arranged to the backrest, and the fixed engaging plate is connected to the fixed suspension spring.

14. The vibration seat according to claim 13, comprising two fixed engaging plates, wherein the vibration body is arranged in a middle part of the backrest, the two fixed engaging plates are located on two opposite sides of the vibration body, and one fixed engaging plate is engaged with at least three fixed suspension spring.

15. The vibration seat according to claim 13 or 14, wherein the fixed suspension spring is a metal part, the fixed engaging plate is a plastic part, and the fixed engaging plate and the fixed suspension spring are integrally injection-molded.
